# FASCICULE DE BREVET EUROPEEN

(11) **EP 2 554 049 B1**
(45) Date de publication et mention de la délivrance du brevet: **02.03.2016**
(21) Numéro de dépôt: 12290224.0
(22) Date de dépôt: 06.07.2012
(51) Int. Cl.: A01N 37/10, A01N 37/40, A01N 39/02, A01N 39/04

(54) **Composition herbicide à efficacité améliorée, méthode de préparation et utilisation.**
Herbizidzusammensetzung mit verbesserter Wirksamkeit, Herstellungs- und Anwendungsmethode
Herbicidal composition with improved efficiency, preparation method and use

(30) Priorité: 02.08.2011 FR 1102420
(43) Date de publication de la demande: 06.02.2013
(73) Titulaire: AGRO INDUSTRIE RECHERCHES ET DEVELOPPEMENTS (A.R.D.), 51110 Pomacle (FR); Phyteurop, 92300 Levallois-Perret (FR)
(72) Inventeur: Estrine, Boris, 51480 Nanteuil La Forêt (FR); Marinkovic, Sinisa, 08300 Avançons (FR); Kuenemann, Philippe, 78500 Sartrouville (FR); Lajoie, Corinne, 51110 Lavannes (FR); Paris, Antoine, 49700 Douai La Fontaine (FR); Ernenwein, Cédric, 02860 Nouvion le Vineux (FR)
(74) Mandataire: Eidelsberg, Victor Albert

(56) Documents cités:
- WO-A1-92/01376
- WO-A1-2010/003889
- WO-A1-2011/082162
- WO-A2-2010/086437
- WO-A2-2011/039172
- BHOWMIK, PRASANTA C.: "New herbicides for crabgrass control in turfgrass", PROCEEDINGS OF THE ANNUAL MEETING OF THE NORTHEASTERN WEED SCIENCE SOCIETY, vol. 38, 1984, pages 282-288, XP009182562,

## Description

La présente invention concerne des compositions contenant au moins un herbicide de la famille des acides phénoxy-alcanoïques et/ou dérivés d'acide benzoïque, les méthodes de préparation desdites compositions et leurs utilisations pour contrôler ou détruire les mauvaises herbes à des doses en herbicide plus basses que les doses généralement admises.

Les acides phénoxy-alcanoïques composent une famille d'herbicides sélectifs très largement utilisée dans le monde. Les membres de ce groupe de molécules (voir formules ci-dessous) comportent au moins un atome de chlore relié en C4 à un noyau benzénique et un autre atome de chlore ou un groupement CH₃ en C2. Quelquefois, un troisième atome de chlore est présent sur le noyau aromatique en C5.

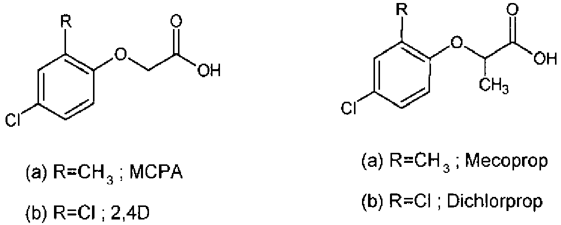

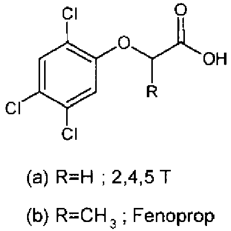

Les herbicides dérivés d'acide benzoïque comme le Dicamba ou le 2,3,6 TBA (voir figure ci-dessous) peuvent être utilisés seul ou en mélange avec des acides phénoxy-alkanoique, notamment pour augmenter le spectre d'activité herbicide.

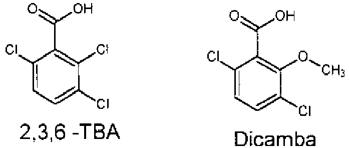

Les formes les plus communément rencontrées sont des sels d'amine, notamment d'éthanol-amine, de triisopropyl ou diméthyl amine ou plus rarement de sodium ou de potassium, solubles dans l'eau, formulées avec ou sans tensioactif. Des esters, notamment éthylique, butoxyéthanolique, butylique, amylique, isobutylique, octylique, isooctylique, de butyl glycol, d'octyl glycol, non solubles dans l'eau, formulés en concentrés émulsionnables (EC) ou en émulsions (EW) sont aussi commercialisés. Ces derniers sont généralement plus phytotoxiques que les sels équivalents, et donc moins sélectifs. Les esters posent aussi des problèmes de volatilité et de dérive lors de la pulvérisation et donc de toxicité pour les utilisateurs et de risque de destruction des cultures voisines et/ou de contamination de l'environnement. Bhowmik et al,Proceedings of the Annual Meeting of the Northeastern Weed Science Society, vol.38, 1984, pages 282-288 décrit une composition de 2,4-D, MCPP et dicamba. Ce document ne divulgue ni un solvant, ni un tensioactif, ni que la composition comprend moins de 3% en masse d'eau, ni non plus que l'herbicide ou les herbicides des deux familles est ou sont sous la forme acide libre.

La pénétration des herbicides à travers les cuticules des plantes sera favorisée par des molécules peu polaires et solubilisées dans une huile ou un solvant. Les formes esters et les formes acides, formulées en EC, en EW ou en microémulsion (ME) seront donc plus phytotoxiques que les sels équivalents solubilisés dans l'eau. Le risque avec les premières formes est de perdre tout ou partie de la sélectivité. La perte de sélectivité est généralement remarquable par des symptômes de phytotoxicité sur les plantes agricoles traitées et des baisses de rendement. On a trouvé que l'utilisation des herbicides de la famille des phénoxy-alcanoïques ou de la famille des dérivés d'acide benzoïque sous formes acides libre pulvérisés à des doses plus faibles que les doses généralement préconisées permet de maintenir une efficacité dans la lutte contre les mauvaises herbes tout en respectant la sélectivité pour les plantes agricoles traitées, pour peu que l'herbicide ou les herbicides sélectionnés soient formulées selon la présente invention. La composition suivant l'invention est exempte d'un herbicide d'une autre famille que les deux familles.

Un autre aspect de la présente invention concerne l'utilisation d'ingrédients inertes à faibles impacts environnementaux et peu toxiques, d'une part, et une utilisation d'herbicides à doses réduites, d'autre part, ce qui constitue des avantages techniques, économiques et environnementaux importants ainsi qu'une moindre dangerosité que la présente invention souhaite couvrir. La présente invention concerne ainsi des compositions contenant au moins un herbicide de la famille des acides phénoxy-alcanoïques et/ou de la famille des dérivés d'acide benzoïque sous forme acide selon la revendication 1, les méthodes de préparation desdites compositions et leurs utilisations pour contrôler ou détruire les mauvaises herbes à des doses en herbicide plus basses que les doses généralement admises.

La présente invention concerne plus particulièrement des compositions contenant au moins un herbicide de la famille des acides phénoxy-alcanoïques et/ou de la famille des dérivés d'acide benzoïque sous forme acide libre formulé avec des ingrédients inertes à faibles impacts environnementaux, les méthodes de préparation desdites compositions et leur utilisation pour contrôler ou détruire les mauvaises herbes à des doses en herbicides plus basses que les doses généralement admises.

La présente invention concerne la formulation de concentrés émulsionnables contenant au moins un herbicide de la famille des acides phénoxy-alcanoïques et/ou de la famille dérivés d'acide benzoïque sous forme acide, au moins un solvant organique ou une phase huileuse et au moins un tensioactif. La composition suivant l'invention contiendra 0 à moins de 3% en masse d'eau. Le mieux est qu'elle soit anhydre.

Les acides phénoxy-alcanoïques sont le 2,4D (l'acide 2,4 dicholorophénoxyacétique), le 2,4DB (l'acide 2-(2,4-dichlorophénoxy)butyrique), le Dichlorprop (l'acide (RS)-2-(2,4-dichlorophénoxy)propionique), le Dichlorprop-P (l'acide (R)-2-(2,4-dichlorophénoxy) propionique), le MCPA (l'acide 4-Chloro-o-tolyloxy-acétique), le MCPB (l'acide 4-(4-chloro-o-tolyloxy) butyrique, le mecoprop (l'acide (RS)-2-(4-chloro-o-tolyloxy)propionique), le mecoprop-p (l'acide (R)-2-(4-chloro-o-tolyloxy)butyrique.

Au titre des dérivés d'acide benzoïque ce sont le Dicamba (l'acide 3,6-dichloro-o-anisique) et le 2,3,6-TBA (l'acide 2,3,6 trichlorobenzoïque).

Les solvants organiques ou les phases huileuses seront choisis pour leur capacité à solubiliser et éviter la cristallisation des herbicides sélectionnés, même à des températures inférieures à 4°C.

Bien que les solvants synthétiques puissent convenir, les solvants ou phases huileuses préférés seront choisis parmi les solvants synthétisés avec au moins une matière première d'origine végétale ou obtenue par un processus faisant intervenir une étape de fermentation, ou obtenue par extraction, séparation et purification d'une biomasse végétale. D'une manière générale, les solvants seront choisis parmi ceux ayant un profil environnemental acceptable. Par profil environnemental acceptable s'entend, entre autres, des produits facilement biodégradables en aérobiose et/ou anaérobiose, et faiblement écotoxiques pour les milieux aquatiques et terrestres. Les solvants seront choisis parmi la classe des terpènes, des esters d'acides obtenus par fermentation ou des esters biodégradables, des alcools obtenus par fermentation ou par synthèse et leurs dérivés partiels ou encore des dérivés des huiles végétales.

Parmi les terpènes, on préférera les monoterpènes linéaires ou cycliques, notamment le limonène, l'alpha-pinène, le béta-pinène, le terpinolène, le dihydromyrcène, le myrcène, le paracymène, les sesquiterpènes linéaires ou cycliques comme le farnesène, les esters de résine de pin, tels que les esters de glycérol ou de pentaérythritol, les alcools terpéniques, tels que le menthol, le terpinéol, l'iso-bornéol, le nérol, le citronellol, le geraniol, le myrcenol, le linalol, le farnesol purifiés ou en mélange.

Parmi les esters d'acide fermentaires, on préférera les esters d'acide lactique, comme le lactate d'éthyle, le lactate de méthyle, le lactate de propyle, le lactate de butyle, le lactate de pentyle, le lactate d'amyle, le lactate de 2-méthyl-butyle, le lactate d'hexyle, le lactate de 2-éthyl-hexyle, le lactate d'isopropyle, le lactate d'isooctyle, le lactate d'octyle, le lactate d'isodécyle, le lactate de décyle, les esters d'acide lactique et des alcools de guerbet de C12 à C24, les di-esters d'acide succinique comme le diméthyl-succinate, le diéthyl-succinate, le diisopropyl-succinate, le di-butyl-succinate, le di-isoamyl-succinate, le di-2-méthyl-butyl-succinate, le di-hexyl-succinate, le di-2éthyl-hexyl-succinate, le di-octyl-sucinate, le di-iso-octyl-succinate, le di-nonyl-succinate, le di-isononyl-succinate, le di-décyl-succinate, le di-isodécyl-succinate, les mono-esters équivalents, les esters d'acide succinique et d'alcools de Guerbet de C12 à C24, les diesters d'acide adipique, notamment le diméthyl-adipate, le diéthyl-adipate, le diisopropyl-adipate, le di-butyl-adipate, le di-isoamyl-adipate, le 2-méthyl-butyl-adipate, le di-hexyl-adipate, le di-2éthyl-hexyl-adipate, le di-octyl-adipate, le di-iso-octyl-adipate, le di-nonyl-adipate, le di-isononyl-adipate, le di-décyl-adipate, le di-isodécyl-adipate, les mono-esters équivalents, le esters d'acide adipique et d'alcools de Guerbet de C12 à C24, les diesters d'acide glutarique et notamment diméthyl-glutarate, le diéthyl-glutarate, le diisopropyl-glutarate, le di-butyl-glutarate, le di-isoamyl-glutarate, le 2-méthyl-butyl-glutarate, le di-hexyl-glutarate, le di-2éthyl-hexyl-glutarate, le di-octyl-glutarate, le di-iso-octyl-glutarate, le di-nonyl-glutarate, le di-isononyl-glutarate, le di-décyl-glutarate, le di-isodécyl-glutarate, les mono-esters équivalents, les esters d'acide glutarique et d'alcools de Guerbet de C12 à C24, les mono, les di ou les tri-esters d'acide citrique, notamment le triméthyl-citrate, triéthyl-citrate, l'acétyl-tri-éthyl-citrate, le tri-propyl-citrate, le tri-butyl-citrate, le tri-amyl-citrate, le tri-2-méthyl-butyl-citrate, le tri-hexyl-citrate, le tri-éthyl-hexyl-citrate, l'acétyl-tri-éthyl-hexil-citrate, l'acétyl-tri-octyl-citrate, le tri-octyl-citrate, le tri-nonyl-citrate, l'acetyl-tri-nonyl-citrate, tri-décyl-citrate, tri-isodécyl-citrate, tri-caprylyl-citrate, les esters d'acides citrique et d'alcools de guerbet de C12 à C24, les esters d'acide fumarique comme le di-méthyl-fumarate, le di-éthyl-fumarate, le di-isopropyl-fumarate, le di-butyl-furmarate, le di-amyl-fumarate, le di-2-méthyl-butyl-fumarate, le di-hexyl-fumarate, le di-2-éthyl-hexyl-fumarate, le di-octyl-fumarate, le di-iso-octyl-fumarate, le di-nonyl-fumarate, le di-iso-nonyl-fumarate, le di-décyl-fumarate, le di-iso-décyl-fumarate, les mono-esters équivalents, les esters d'acide fumarique et d'alcools de guerbet de C12 à C24, les esters d'acide malique comme le di-méthyl-malate, le di-éthyl- malate, le di-isopropyl-malate, le di-butyl-malate, le di-amyl-malate, le di-2-méthyl-butyl-malate, le di-hexyl- malate, le di-2-éthyl-hexyl-malate, le di-octyl-malate, le di-iso-octyl-malate, le di-nonyl-malate, le di-iso-nonyl-malate, le di-décyl-malate, le di-iso-décyl-malate, les mono-esters équivalents, les esters d'acide malique et d'alcools de guerbet de C12 à C24, les esters d'acide acétique comme l'acétate d'éthyle, l'acétate de propyle, l'acétate d'isopropyle, l'acétate de butyle, l'acétate d'amyle, l'acétate de 2-méthyl-butanol, l'acétate d'hexyle, l'acétate de 2-éthyl-hexyle, l'acétate d'octyle, l'acétate d'iso-octyle, l'acétate de nonyle, l'acétate d'iso-nonyle, l'acétate de décyle, l'acétate d'iso-décyle, les esters d'acide acétique et d'alcools de guerbet de C12 à C24.

D'autres esters préférés seront les esters dérivés d'huiles végétales, notamment les esters d'huile de colza, tournesol, soja, lin, coprah, palme, ricin, arachide, noix, olive, maïs, noix de coco sous forme éthylique, méthylique, propylique, isopropylique, butylique, isobutylique, amylique, 2-méthyl-butylique, hexylique, 2-éthyl-hexylique, octylique, iso-octylique, nonylique, isononylique, décylique, isodécylique, glycérique ou estérifiées par des alcools de guerbet de C12 à C24.

Les esters d'acides gras purifiés notamment les esters d'acide caproique, caprylique, caprique, laurique, myristique, myristoleique, palmitique, palmitoléique, stéarique, oléique, ricinoléique, linoléique, arachidique, gadoléique, béhénique, érucique, lignocérique sous forme éthylique, méthylique, propylique, isopropylique, butylique, isobutylqiue, amylique, 2-méthyl-butylique, hexylique, 2-éthyl-hexylique, octylique, iso-octylique, nonylique, isononylique, décylique, isodécylique, palmétique, cétylique, isocétylqiue, oléique, stéarique, isostéarique, linoléique, arachidique, béhénique, ou estérifiées par des alcools de guerbet de C12 à C28, purs ou en mélange.

Parmi les alcools et dérivés d'alcools, on préférera l'éthanol, l'isopropanol, le butanol, les alcools amyliques, le 2-méthyl-butanol, l'hexanol, le 2-éthyl-hexanol, l'octanol, l'iso-octanol, le décanol, l'isodécanol, le dodécanol, les alcools de Guerbet de C12 à C24, purs ou en mélanges, le glycérol et les dérivés partiels de glycérol, notamment les polyglycérol et les esters de polyglycérol comme le polyglycérol polyricinoleate, les esters de glycérol comme le mono-oélate de glycérol, le carbonate de glycérol, l'érythritol et ses dérivés notamment le pentaérythritol mono-oléate, le pentaérythritol tetraisostéarate, le pentaérythritol tetraoléate, les diols tels que l'éthylène glycol, le 1,2 propanediol, le 1,3 propanediol, le 2,3 butanediol, le 1,2 butanediol, le 1,4 butanediol, le 1,3 butanediol, le 1,5-pentanédiol, le 1,2 pentanédiol, le 2-éthylhexane-1,3-diol, le 1,8 octanédiol, le 2-méthyl-2,4-pentanédiol, le d-éthylène glycol, le di-propylène glycol.

Les huiles naturelles pourront aussi être utilisées et notamment les huiles de colza, de tournesol, de soja, de lin, de coprah, de palme, de ricin, d'arachide, de noix, d'olive, de maïs, de noix de coco, d'amande douce, d'argan, d'argousier, d'avocat, de blé, de bourrache, de calendula, de callophylum, de coton, de jojoba, de macadamia, de pin, de pépins de raisin, de sésame, de noyau de pêche, de noix de galip, les triglycérides de caprylil/caprique.

Le système émulsionnant de la préparation selon l'invention a pour objectif de rendre dispersibles ou émulsionnables les molécules de la préparation non solubles dans l'eau. Il sera constitué d'un ou plusieurs tensioactifs solubilisés ou non dans l'eau ou un solvant tiers.

Le système émulsionnant contiendra au moins un tensioactif de formule ROXn où R est un groupement aliphatique linéaire ou ramifié avec ou sans insaturation et comportant de 6 à 22 atomes de carbone, de préférence de 8 à 12 atomes de carbone, X est un reste de pentose, plus particulièrement un reste de xylose et n est compris entre 1 et 3, plus particulièrement entre 1 et 1,8 et représente le degré d'oligomérisation du sucre.

Le système émulsionnant précédemment cité peut être utilisé seul ou en mélange avec un co-tensioactif non ionique, anionique, cationique ou amphotère. De préférence, on utilisera un co-tensioactif non ionique ou anionique.

Parmi les co-tensioactifs non ioniques, on préférera les esters de sorbitan éthoxylés ou non éthoxylés, comme le mono-laurate de sorbitan, le mono-palmitate de sorbitan, le mono-oléate de sorbitan, le mono-stéarate de sorbitan, le tri-oléate de sorbitan, le tri-stéarate de sorbitan, le sesqui-octanoate de sorbitan, le sesqui-oléate de sorbitan, les dérivés éthoxylés de la série des Tween comme le sorbitan monolaurate polyéthoxylé à 20 motifs éthoxylats (ou tween 20), le sorbitan mono-oléate polyéthoxylé à 20 motifs éthoxylats (ou tween 80), le sorbitan mono-stéarate polyéthoxylé à 20 motifs éthoxylats (ou tween 60), les esters de glycérol ou poly-glycérol comme le glycéril-mono-oléate, le glycéryl-mono-cocoate, le glycéryl-mono-laurate, le glycéryl-mono-isostéarate, le glycéril-di-oléate, le glycéryl-mono-ricinoléate, le poly-glycérol-polyricinoléate, le poly-glycérol-polyisostéarte, le poly-glycérol-polyoléate, le poly-glycérol-polylaurate, le PEG-7 glycéryl cocoate, le PEG-12 Glycéryl laurate, le PEG-20 glycéryl stéarate, le PEG-100 glycéryl stéarate, les esters de polyéthylène glycol comme le PEG-200 monooléate, le PEG-400 di-isostéarate, le PEG-400 dioléate, le PEG-400 diricinoléate, le PEG-400 monolaurate, le PEG-400 monooléate, le PEG-400 monostéarate, le PEG-600 dioléate, le PEG-600 distéarate, le PEG-600 monooléate, le PEG-1500 monostéarate, les alcools gras éthoxylés et plus particulièrement ceux ayant une HLB comprise entre 4 et 12 comme l'alcool stéarylique de 2 à 10 motifs éthoxylés, l'alcool oléique de 2 à 10 motifs éthoxylés, l'alcool cétylique de 2 à 10 motifs éthoxylés, les alcools C13-C15 de 2 à 10 motifs éthoxylés, l'alcool laurique de 2 à 8 motifs éthoxylés, l'alcool décylique de 2 à 8 motifs éthoxylés, les esters d'acide gras polyéthoxylés comme l'ester méthylique de colza à 7 motifs éthoxylés, les huiles végétales polyéthoxylés comme l'huile de ricin hydrogénée ou non hydrogénée à 10 motifs éthoxylés, les esters de sucrose comme le mono ou les poly-laurate de saccharose, le mono ou les poly-myristate de saccharose, le mono ou les poly-palmitate de saccharose, le mono ou les poly-stéarate de saccharose.

Les co-tensioactifs anioniques préférés seront, par exemple, le stéaroyl-lactate de sodium, le glycéryl-stéarate-citrate, le glycéryl-stéarate-lactate, le lauroyl, le cocoyl, le myristoyl, l'oléoyl ou le stéaroyl-glutamate de sodium, le lauroyl, le cocoyl, le myristoyl, l'oléoyl ou le stéaroyl-sarcosinate de sodium, les esters d'acide sulfo-succinique comme le di-amyl, di-hexyl, di-2éthyl-hexyl, di-octyle, di-tridécyl, di-isodécyl sulfosuccinate de sodium, les dérivés éthoxylés comme le laureth di-sodium sulfosuccinate, les sels potassique, sodique ou de diéthanolamine d'acide gras comme l'oléate de potassium, le sodium palmitate, le potassium olivate, les sels potassique, sodique ou de diéthanolamine des esters phosphoriques comme le potassium cétyl phosphate, les dérivés anioniques des poly-glucosides d'alkyle comme le cocopolyglucose succinate de sodium, le cocopolyglucose citrate de disodium, le cocopolyglucose tartrate de sodium, le lauryl glucose carboxylate de sodium, les alcools gras sulfatés comme le C12/C14 alcool sulfate de sodium, les alcools gras éthoxylés sulfatés comme l'alcool laurique à 4 motifs éthoxylés sulfaté de sodium ou de magnésium.

Le taux du ou des herbicides de la famille des acides phénoxy-alcanoïques et/ou dérivé d'acide benzoïque sous formes acides dans la préparation sera compris entre 1 et 95% en masse par rapport à la masse totale de la préparation, de préférence entre 5 et 60%, de préférence encore de 10 à 45%, le reste étant constitué du ou des tensioactifs et du ou des solvants ou huiles, et éventuellement d'un ou des co-tensioactifs et plus rarement d'eau. De préférence, la composition suivant l'invention contiendra moins de 3% en masse d'eau, de préférence moins de 1% en masse, et de préférence encore moins de 0,1%. Les compositions anhydres seront donc préférées.

La proportion du système émulsionnant, constitué de tensioactifs et éventuellement de co-tensioactifs, par rapport aux solvants ou huiles sera comprise entre 1/0,10 et 1/20, et plus généralement entre 1/0,5 et 1/9, plus généralement encore entre 1/1 et 1/8,5.

S'il est présent, le ou les co-tensioactifs représenteront de 0,1 à 50% de la masse totale su système émulsionnant présent dans la composition, de préférence de 1 à 50%, de préférence encore de 10 à 45%.

Les compositions selon l'invention contiendront donc, de préférence, par rapport à la masse totale de la préparation, de 1 à 65%, et de préférence de 10 à 45%, d'un ou plusieurs acides phénoxy-alcanoïques sous formes acides, de 20 à 98%, et de préférence de 25 à 85%, d'un ou plusieurs solvants ou huiles, de 1 à 65%, et de préférence de 5 à 45%, d'un ou plusieurs tensioactifs de formule ROXn où R est un groupement aliphatique linéaire ou ramifié avec ou sans insaturation et comportant de 8 à 12 atomes de carbone, X étant un reste de xylose et n étant un nombre compris entre 1 et 1,8, et de 0 à 60%, et de préférence de 1 à 25%, d'un ou plusieurs co-tensioactifs non-ioniques, anioniques, cationiques ou amphotères.

Les compositions selon l'invention peuvent être préparées selon l'un des procédés suivants.

Les solvants peu ou pas volatils (non classés dans la catégorie des produits COV) sont mélangés et portés à une température comprise entre 0 et 150°C, préférentiellement de 25 à 95°C, de préférence encore de 35 à 65°C, sous agitation mécanique à l'aide d'une pale d'agitation et d'un moteur, ou par recirculation du liquide via une pompe. Une fois la température stabilisée, le ou les herbicides, généralement sous la forme de poudres ou de solides en morceaux ou de pastilles, sont ajoutés progressivement sur le liquide manuellement ou à l'aide d'un chargeur de poudre mécanique. Une fois que tout le solide est solubilisé dans le liquide, le tout formant un liquide homogène, généralement isotrope, le chauffage est arrêté et éventuellement remplacé par un refroidissement pour atteindre une température comprise entre 10 et 45°C, de préférence entre 10°C et la température ambiante. Les autres ingrédients sont ensuite ajoutés à la préparation sous agitation mécanique jusqu'à l'obtention d'un liquide homogène. Le réacteur servant de milieu de mélange pourra être ouvert et à pression atmosphérique, ou fermé et surmonté d'une colonne de refroidissement servant à condenser les vapeurs créées et à pression atmosphérique, ou inerté par un gaz tel que l'azote.

Une variante de ce procédé de préparation consiste à ajouter l'ensemble des liquides, soit les solvants, les huiles, les tensioactifs et les co-tensioactifs sous formes liquides et mettre l'ensemble en agitation, puis d'ajouter l'ensemble des solides, soit les herbicides sous formes acides et les tensioactifs et co-tensioactifs solides à une température comprise entre 15 et 150°C, de préférence entre 25 et 95°C, de préférence encore entre 35 et 65°C. L'agitation sera maintenue jusqu'à l'obtention d'un liquide homogène, et éventuellement isotrope, avant d'engager l'étape de refroidissement.

Une autre variante du procédé précédent consiste à ajouter l'ensemble des ingrédients de la préparation en une seule fois, à laisser le mélange sous agitation mécanique et à une température comprise entre 15 et 150°C, de préférence entre 25 et 95°C, de préférence encore entre 35 et 65°C, jusqu'à l'obtention d'un liquide homogène et éventuellement isotrope. Le produit sera ensuite refroidi par arrêt du chauffage et retour à la température ambiante où à l'aide d'un cryostat.

Les compositions herbicides selon l'invention seront appliquées sur les plantes ciblées de manière à contrôler leur croissance ou à provoquer leur dégénérescence et leur mort. Les méthodes d'application seront celles usuellement utilisées en agriculture, arboriculture, viticulture, maraîchage, jardinage ou par les collectivités. Les compositions herbicides peuvent être appliquées directement sur les plantes ciblées ou après dilution dans l'eau ou une phase aqueuse à une concentration permettant de garantir l'efficacité du traitement tout en garantissant une sécurité suffisante pour les utilisateurs ou les consommateurs et sans risque pour l'environnement. La quantité d'eau apportée représente de 75 à 99,999%, de préférence de 95 à 99,9% de la masse totale de la préparation. D'autres compositions fongicides, insecticides, élicitrices, régulateurs de croissance, nutritives ou d'autres ingrédients inertes (ou adjuvants extemporanés) peuvent être ajoutés à la préparation (la bouillie) avant sont usage.

Les préparations peuvent être pulvérisées sur les plantes par aspersion à l'aide d'un pulvérisateur manuel, de moyens mécaniques roulant (tracteur, quad, voiture etc.) ou volant (avion, hélicoptère etc.). La qualité de la pulvérisation sera assurée par le choix judicieux des buses de pulvérisation, des pressions appliquées au liquide, et des vitesses de passage du système pulvérisant sur la culture.

En grandes cultures (céréales, maïs, betteraves etc.), les quantités de bouille herbicide pulvérisées sont généralement de 50 à 1000 litres par hectare, plus particulièrement de 100 à 500 litres par hectare, et plus particulièrement encore de 100 à 300 litres par hectare. Pour le traitement des prairies, des gazons ou en arboriculture, les quantités sont généralement de 100 à 1000 litres par hectare, et plus particulièrement de 200 à 500 litres par hectare.

Afin de garantir la sélectivité des préparations herbicides selon l'invention, les doses d'herbicides appliquées sur la culture seront inférieures aux doses généralement pratiquées. Ces doses généralement pratiquées sont fonction du type de culture ou de plante, de la nature du ou des herbicides de la préparation, du pays ou des régions d'application, de la saison, de la méthode d'application et éventuellement des conditions climatiques. Les doses et les méthodes d'applications peuvent être préconisées par les fournisseurs des herbicides, des instituts spécialisés, des centres techniques, le législateur du pays concerné, des associations professionnelles ou de consommateurs, des coopératives agricoles. Les doses applicables à l'hectare peuvent varier en fonction de la législation en vigueur du pays concerné et des matières actives utilisées seules ou en combinaison. A titre d'exemple et sans l'intention de s'y limiter, les compositions selon l'invention à base de 2,4D acide peuvent être appliquées en gramme d'herbicide par hectare, pour les céréales de 8.4 à 840 g/ha, de préférence de 280 à 560 g/ha, pour le maïs de 12 à 1200 g/ha, de préférence de 240 à 800 g/ha, en arboriculture de 10 à 1000 g/ha, de préférence de 200 à 667 g/ha, pour les gazons et les prairies de 15 à 1500 g/ha, de préférence de 300 à 1250 g/ha.

En grande culture (céréales, maïs, betteraves etc.) et arboriculture, les compositions herbicides selon l'invention seront donc appliquées à une dose réduite d'un facteur 1,01 à 1000, plus généralement d'un facteur 1,5 à 100, plus généralement encore d'un facteur 1,5 à 10 et encore plus particulièrement d'un facteur 1,5 à 5 par rapport à la dose préconisée jusqu'ici en fonction de la culture ou la plante à traiter, la méthode de traitement, des conditions climatiques. Pour le traitement des prairies ou des gazons, les compositions herbicides selon l'invention seront donc appliquées à une dose réduite d'un facteur 1,01 à 1000, plus généralement d'un facteur 1,2 à 100, plus généralement encore d'un facteur 1,2 à 10 et encore plus particulièrement d'un facteur 1,2 à 5 par rapport à la dose préconisée jusqu'ici en fonction de la culture ou la plante à traiter, la méthode de traitement, des conditions climatiques.

La composition herbicide de l'invention peut être utilisée pour contrôler de manière immédiate ou sur le long terme un grand nombre d'espèces différentes annuelles ou vivaces et ce en fonction du ou des herbicides présents. A titre d'exemple, et sans l'intention de s'y limiter, le tableau suivant donne des exemples des plantes contrôlées en fonction des herbicides utilisés dans la composition :

| **Non français** | **Nom scientifique** | **2,4 D** | **2,4 DB** | **dichlorprop-p** | **2,4-MCPA** | **2,4-MCPB** | **mecoprop** |
|---|---|---|---|---|---|---|---|
| Anthémis (des champs, élevée, cotule, mixte) | *Anthemis (arvensis, altissima. cotula) chamaemelum mixtum* | | | | x | | |
| Armoise vulgaire | *Artemisia vulgaris* | x | | | | | |
| Arroche étalée | *Atriplex patula* | x | | | x | x | x |
| Bleuet | *Centaurea cyanus* | x | x | | x | x | |
| Capselle | *Capsella bursa pastoris* | x | x | | x | x | x |
| Cardamine hérissée | *Cardamine hirsuta* | x | | | | | |
| Céraiste aggloméré | *Cerastium glomeralum* | | | | | | x |
| Chénopodes (blanc,hybride, polysperme) | *Chenopodium (album. hybridum.polyspermum)* | x | x | | x | x | x |
| Amarantes (réflechie, hybride, blite, blanche) | *Amaranthus (retroflexus, hybridus, blitum alb us)* | | x | | x | x | x |
| coquelicot | *Papaver rhoeas* | x | x | | x | x | x |
| Datura stramoine | *Datura stramonium* | | | | | x | |
| Epiaires (annuelles, des champs) | *Stachya (annula, arvensis)* | | | | | x | |
| Epilobe à quatre angles | *Epilobium tetragonum* | x | | | | | |
| Ficaire fausse renoncule | *Ranunculus ficaria* | x | | | | | |
| Fumeterres (officinale, à petites fleurs) | *Fumaria (officinalis. parviflora)* | | | | | x | |
| Gaillet gratteron | *Galium aparine* | | | x | | | x |
| Galinsugas (à petites fleurs, cilié) | *Galinsoga (parviflora, quadriradiata)* | x | | | x | | x |
| Géranium | *geranium* | x | | | | x | |
| Gesse sans feuille | *Lathyrus aphaca* | x | | | x | x | |
| Grémil des champs | *Buglossoides arvenis* | | | | x | x | |
| Helminthie fausse vipérine | *Picris echioides* | | x | | | | |
| Jonc des crapauds | *Juncus bufonius* | | | | x | | |
| Laiteron rude | *Sonchus asper* | x | x | | x | x | |
| Lamiers (pourpre, amplexicaule) | *Labium (purpureum.amplexicaule)* | | | | | x | |
| Linaires (batarde,élatine) | *Kickxia (spuria, elatine)* | | | | | x | |
| Mouron des champs | *Anagallis arvensis* | | | | | x | |
| Moutarde des champs | *Sinapis arvensis* | x | x | | x | x | x |
| Myosotis | *Myosotis arvensis* | x | | | x | | |
| Ortie royale | *Galeopsis tetrahit* | x | | | x | x | x |
| Passerage des champs | *Leprdium campestre* | | | | | | |
| Pensée des champs | *Viola arvensis* | | | | | x | |
| Plantains (lancéolé, majeur) | *Plantago (lanceolata,major)* | x | x | | x | | |
| Rapistre rugueux | *Rapistrum rugosum* | x | x | | x | x | x |
| Ravenelle | *Raphanus raphanistrum* | x | | | x | | x |
| Renoncule (des champs. des marais) | *Ranunculus (arvensis, sardous)* | x | x | | x | x | x |
| Renoncule rampante | *Ranunculus repeins* | x | | | x | x | x |
| Renouée des oiseaux | *Polygonum aviculare* | | | x | | x | |
| Séneçon vulgaire | *Senecio vulgaris* | x | | | x | x | |
| Spéculaire miroir de Vénus | *Legousia speculum veneris* | | | | | x | |
| Spergule des champs | *Spergula arvensis* | x | | | x | | |
| Stellaire intermédiaire | *Stellaria media* | | | x | | | x |
| Tabouret des champs | *Thlaspi arvense* | x | x | | x | x | x |
| Véronique feuille de lierre | *Veronica hederifolia* | | | | x | | |

| **Nom français** | **Nom scientifique** | **2,4 D** | **2,4 BD** | **dichlorprop-p** | **2,4-MCPA** | **2,4-MCPB** | **mecoprop** |
|---|---|---|---|---|---|---|---|
| Véronique de perse | *Veronica persica* | | | | x | | |
| Vesce cultivée | *Vicia saliva* | x | x | | x | x | |
| chardon | *Cirsium arvense* | x | x | | x | x | |
| Liscron | *Convolvulus arvensis* | x | | | | x | |

Les compositions selon l'invention seront donc utilisées pour traiter les plantes de grandes cultures, notamment les céréales comme l'ensemble des espèces de blé, d'orge, de seigle, de triticale, de millet, d'épeautre, de sarrasin, de sorgho, de riz, de maïs, de fonio, d'éleusine, d'engrain, de teff, de moha, en plein champ ou entre les rangs (traitement dirigé ou en traitement localisé), pour traiter les vergers, notamment les pécher, poirier, pommier, prunier, cerisier, noisetier, abricotier, amandier, kiwi, entre les rangs, pour traiter les prairies permanentes et les labours reverdis en inter-cultures, pour traiter les gazons de graminées, en horticulture notamment pour le désherbage du muguet et des fraisiers, pour traiter la canne à sucre, pour traiter toute plante génétiquement modifiée et résistante au moins à l'un des herbicides de la composition.

L'invention sera illustrée plus en détail par les exemples suivants, donnés uniquement à titre illustratif.

### FORMULATIONS

Formulations d'EC (Concentrés Emulsionnables) en mélangeant les ingrédients des préparations à 45°C (ex 1 à 5) ou 85°C (ex 6 à 13) à l'aide d'un agitateur mécanique pendant 30 mn. Après refroidissement, toutes les formules obtenues sont homogènes, limpides et peux visqueuses (<1000 cps à 20°C mesurée à l'aide d'un viscosimètre Brookfield DV module 3 et d'une aiguille tournant à 12 tours/mn). Toutes les formules sont stables aux températures usuelles (de 4°C à 45°C) pendant au moins 3 mois. Diluées à 5% dans une eau dure, selon le test CIPAC MT 36, toutes forment une émulsion spontanément, stable pendant au moins 2 h à la température du laboratoire. Au bout de 24 h, la couche de crème généralement observée en haut du liquide est parfaitement ré-émulsionnée par un simple retournement de l'éprouvette.

Le test CIPAC MT36 consiste à diluer 5 ml de préparation dans 100 ml d'eau standard afin de donner une émulsion huile dans eau après un retournement de l'éprouvette graduée utilisée pour le mélange. La stabilité de cette émlusion est ensuite déterminée en mesurant le volume d'huile relarguée ou de phase crémée après 30 mn, 2 h et 24 h de mise en repos. L'eau standard utilisée est une eau à 342 ppm de dureté avec un rapport Ca2+/Mg2+ de 4/1.

Les pourcentages sont exprimés en masse par rapport à la masse totale de la préparation.

### Exemple 1 :

| | |
|---|---|
| 2,4D Acide | 15,0% |
| 2-hexyl-décanol | 42.5% |
| C8/C12 xylosides (Dp=l,5) | 42,5% |

### Exemple 2 : N° Formule EC13107400

| | |
|---|---|
| 2,4D Acide | 15,0% |
| Dertol 90 (DRT) | 65,0% |
| 2-hexyl-décanol | 10.0% |
| C8/C12 xylosides(Dp=1,5) | 10.0% |

### Exemple 3 :

| | |
|---|---|
| 2,4D Acide | 35,00% |
| Dertol 90 (DRT) | 5,85% |
| Di-éthyl-Succinate | 13,65% |
| isodécanol | 6,82% |
| 1,3 propanediol | 26,00% |
| Tween 80 | 5,85% |
| C8/C12 xylosides (Dp=1,5) | 6.83% |

### Exemple 4 : N° Formule EC13108000

| | |
|---|---|
| 2,4D Acide | 25,00% |
| Dertol 90 (DRT) | 6,75% |
| Di-éthyl-succinate | 15,75% |
| 1,3 Propanediol | 30,00% |
| Tween 80 | 6,75% |
| XP622 (ARD) | 15,75% |

XP622 est un émulsionnant à base de xylosides d'alkyle et d'alcools de Guerbet.

### Exemple 5 : N° Formule EC13108100

| | |
|---|---|
| 2,4D Acide | 15,00% |
| Dertol 90 | 10,00% |
| Di-éthyl-succinate | 30,00% |
| 1,3 Propanediol | 20,00% |
| Radiasurf 7157 (polysorbate 80) | 10.0% |
| XP622 (ARD) | 15,00% |

XP622 est un émulsionnant à base de xylosides d'alkyle et d'alcools de Guerbet.

### Exemple 6 :

| | |
|---|---|
| MCPA Acide | 15,0% |
| Dertol 90 (DRT) | 65,0% |
| 2-hexyl-décanol | 10.0% |
| C8/C12 xylosides(Dp=1,5) | 10.0% |

### Exemple 7 :

| | |
|---|---|
| MCPA Acide | 25,00% |
| Dertol 90 (DRT) | 6,75% |
| Di-éthyl-succinate | 15,75% |
| 1,3 Propanediol | 30,00% |
| Tween 80 | 6,75% |
| XP622 (ARD) | 15,75% |

XP622 est un émulsionnant à base de xyxosides d'alkyle et d'alcools de Guerbet.

### Exemple 8 :

| | |
|---|---|
| Dichloroprop Acide | 15,0% |
| Dertol 90 (DRT) | 65,0% |
| 2-hexyl-décanol | 10.0% |
| C8/C12 xylosides(Dp=1,5) | 10.0% |

### Exemple 9 :

| | |
|---|---|
| Dichloroprop Acide | 25,00% |
| Dertol 90 (DRT) | 6,75% |
| Di-éthyl-succinate | 15,75% |
| 1,3 Propanediol | 30,00% |
| Tween 80 | 6,75% |
| XP622 (ARD) | 15,75% |

XP622 est un émulsionnant à base de xylosides d'alkyle et d'alcools de Guerbet.

### Exemple 10 :

| | |
|---|---|
| Mecoprop Acide | 15,0% |
| Dertol 90 (DRT) | 65,0% |
| 2-hexyl-décanol | 10.0% |
| C8/C12 xylosides(Dp=1,5) | 10.0% |

### Exemple 11 :

| | |
|---|---|
| Mecoprop Acide | 25,00% |
| Dertol 90 (DRT) | 6,75% |
| Di-éthyl-Succinate | 15,75% |
| 1,3 Propanediol | 30,00% |
| Tween 80 | 6,75% |
| XP622 (ARD) | 15,75% |

XP622 est un émulsionnant à base de xylosides d'alkyle et d'alcools de Guerbet.

### Exemple 12 :

| | |
|---|---|
| Mecoprop-P Acide | 15,0% |
| Dertol 90 (DRT) | 65,0% |
| 2-hexyl-décanol | 10.0% |
| C8/C12 xylosides(Dp=1,5) | 10.0% |

### Exemple 13 :

| | |
|---|---|
| Mecoprop-P Acide | 25,00% |
| Dertol 90 (DRT) | 6,75% |
| Di-éthyl-succinate | 15,75% |
| 1,3 Propanediol | 30,00% |
| Tween 80 | 6,75% |
| XP622 (ARD) | 15,75% |

XP622 est un émulsionnant à base de xylosides d'alkyle et d'alcools de Guerbet.

### ESSAIS DE PLEIN CHAMP

Deux types d'essais sont menés. Des essais de sélectivité d'une part afin de démontrer la sélectivité des préparations par rapport à la culture en place. Les notations concernent tout changement de comportement de la culture (tassement, décoloration des feuilles, déformation, retard de croissance, etc...) par rapport à une parcelle non traitée. Cette phytotoxicité est notée sur une échelle de 0 à 100, en fonction des changements observés par rapport à la parcelle non traitée. Au-delà de 15, la sélectivité n'est plus garantie. Les essais sont réalisés en 4 répétitions et suivis jusqu'à la récolte afin de déterminer les effets potentiels sur les rendements.

Le deuxième type d'essais concerne l'efficacité des traitements par rapport à une ou plusieurs cibles déterminées (mauvaises herbes, repousses de cultures en inter-cultures). Les essais sont menés en trois répétitions. L'application est réalisée à un stade déterminé (t0) de croissance et les parcelles recevant le traitement sont suivies à intervalles réguliers (t0+10 jours, t0+20 jours etc.). L'efficacité est mesurée en pourcentage, obtenue par rapport au nombre d'adventice contrôlé (montrant de fort taux de phytotoxicité, de dégénérescence et mort) au m² par rapport au nombre d'adventice au m² à t0 ou à la culture non traitée. Cette notation peut être faite à l'aide de 4 cadres de 0,25m² par parcelle. Pour les essais réalisés en culture, une notation de phytotoxicité est effectuée sur la culture afin d'évaluer aussi la sélectivité à la dose de l'essai.

Les essais sont menés selon les conditions des "Bonnes Pratiques d'Expérimentations" et en suivant les méthodes éditées en France par la "Commission des Essais Biologiques (CEB)".

Les applications sont réalisées à l'aide d'un pulvérisateur électrique à jet projeté porté sur le dos de l'expérimentateur, équipé d'une rampe frontale de 3 m de 12 buses ou 9 buses (espacées de 25 ou 33 cm). Les buses utilisées sont de type Teejet® ou Albuz® antidérives et délivrant un jet à 80°.

Les préparations selon l'invention seront comparées aux standards du marché utilisés à leurs doses homologuées. Les essais étant réalisés en France, ces doses homologuées sont celles prescrites par le législateur et telles qu'elles sont publiées sur "Le catalogue des produits phytopharmaceutiques et de leurs usages des matières fertilisantes et des supports de culture homologués en France" disponible en ligne à l'adresse : http://e-phy.agriculture.gouv.fr/.

### SELECTIVITE

Les exemples suivant démontrent les effets possibles de perte de sélectivité des préparations de 2,4D acide selon l'invention aux doses homologuées ou usuellement préconisées pour le 2,4D sel de diméthylamine et le respect de la sélectivité à la demi et au quart de cette dose.

### Exemple 14 : Sélectivité sur blé

La formulation de l'exemple 2 (EC 13107400) est utilisée à 1,4, 2,8 et 5,6 l/ha soit à 210, 420 et 840 g/ha de 2,4D Acide et est comparée à une préparation commerciale contenant 600 g/l eq.acide de 2,4D sel de diméthyl-amine (réf C600) et utilisée à sa dose homologuée de 1,41/ha soit 840 g/ha d'équivalent 2,4D acide ainsi qu'à la préparation de référence (Ref M) contenant 180 g/ha d'équivalent Ioxynil acide et 290 g/ha d'équivalent mécoprop-p acide à sa dose homologuée de 2.0 l/ha soit 360 g/ha d'équivalent Ioxynil acide et 580 g/ha d'équivalent mécoprop-p.

Le tableau ci-dessous reprend les résultats obtenus sur du blé tendre d'hiver (variété haussmann), traité le 26 avril dans le département de la marne (51-F) à l'aide d'un pulvérisateur manuel délivrant 200 l/ha.

| | g/ha Eq Acide | Phytotoxicité (% visuel 43 jours après le traitement) | Rendement (Q/ha, 95j après le traitement) |
|---|---|---|---|
| témoin | | 0 | 124.1 |
| EC 13107400 | 210 | 0 | 123.3 |
| EC 13107400 | 420 | 0 | 122.8 |
| EC 13107400 | 840 | 5 | 121.6 |
| Réf C600 | 840 | 0 | 123.6 |
| Réf M | 940* | 4.3 | 120.9 |

| | | | |
|---|---|---|---|
| * Mélange de Ioxynil et mécoprop-p | | | |

La formule de l'exemple 2 montre de légers signes de phytotoxicité sur le blé à 840 g/ha. Utilisé à demi ou à quart de la dose homologuée des équivalents sels de diméthylamine, la sélectivité est parfaitement respectée.

### Exemple 15 : Sélectivité sur maïs

La formulation de l'exemple 2 (EC 13107400) est utilisée à 2, 4 et 8 l/ha soit à 300, 600 et 1200 g/ha de 2,4D Acide et comparée à une préparation commerciale (réf A600) contenant 600 g/l eq.acide de 2,4D sel de diméthyl-amine utilisé à sa dose homologuée de 2.0/ha soit 1200 g/ha d'équivalent 2,4D acide.

Le tableau ci-dessous reprend les résultats obtenus sur du Mmaïs (variété Storm), traité le 27 mai dans le département de la somme (80-F) à l'aide d'un pulvérisateur manuel délivrant 200 l/ha.

| | g/ha Eq Acide | Phytotoxicité (% visuel 60 jours après le traitement) | Rendement (Q/ha, 150j après le traitement) |
|---|---|---|---|
| Témoin | | 0 | 121.04 |
| EC 13107400 | 300 | 0 | 117.45 |
| EC 13107400 | 600 | 0 | 101.40 |
| EC 13107400 | 1200 | 30 | 76.20 |
| Réf A600 | 1200 | 0 | 110.18 |

La formule de l'exemple 2 montre des signes de phytotoxicité sur le maïs à 1200 g/ha. Utilisé à demi ou à quart de la dose homologuée des équivalents sels de diméthylamine, la sélectivité est parfaitement respectée.

### EFFICACITE

### Exemple 16 : Traitement en plein champ et en inter-culture.

La formule de l'exemple 2 (EC13107400) est comparée à une préparation commerciale (réf A600) contenant 600 g/l eq.acide de 2,4D sel de diméthyl-amine utilisé à sa dose homologuée de 2.0 l/ha soit 1200 g/ha d'équivalent 2,4D acide pour le traitement du Maïs infecté de Liseron (25% de couverture) et à cette même préparation utilise à 11/ha pour apporter une dose de 600 g/ha eq.acide pour le traitement des champs en inter-culture, sur la destruction des repousses de colza et de l'OEillette.

Les formules des exemples 4 et 5 (EC13108000 et EC13108100) seront aussi comparées à cette même préparation à la dose de 600 g/ha eq.acide pour le traitement des repousses de colza et de OEillette en inter-culture.

Les formulations des exemples 2, 4 et 5 sont utilisées à la demi-dose (D/2) et au quart-dose (D/4) de la référence commerciale. Les résultats sont présentés en pourcentage d'efficacité relatif par rapport aux résultats obtenu avec la préparation de référence à pleine dose (efficacité réelle remise à 100).

| | Dose Eq acide / ha | Liseron des Haies (CALSECV), 14 jours après traitement, 25% de couverture (témoin) | Repousse de Colza (BRSNNH1), moyenne de 4 essais, 21 jours après traitement | OEillette (PAPSO), 28 jours après traitement, 85% de couverture (témoin) |
|---|---|---|---|---|
| Ref A600 | D | 100 | 100 | 100 |
| EC 13107400 | D/2 | 98.4 | 119 | 145.5 |
| EC 13107400 | D/4 | 81.4 | 95.9 | 78.7 |
| EC 13108000 | D/2 | | 125.4 | 151.5 |
| EC 13108000 | D/4 | | 98.5 | 96.9 |
| EC 13108100 | D/2 | | 128.6 | 151.5 |
| EC 13108100 | D/4 | | 95.9 | 96.9 |

Les résultats obtenus montrent qu'à la demi-dose, les efficacités des formulations des exemples 2, 4, 5 préparées selon l'invention sont largement supérieures à celle de la formule commerciale à pleine dose. A la quart-dose, les résultats des formulations des exemples 2, 4 et 5 sont sensiblement équivalents que ceux de la formulation commerciale à pleine dose.

L'exemple 15 montre aussi qu'à la demi-dose et au quart-dose que la sélectivité vis-à-vis du maïs est totalement respectée.

### Exemple 17 : Traitement des gazons

La formule de l'exemple 2 (EC13107400) est comparée à une préparation commerciale (réf A600) contenant 600 g/l eq.acide de 2,4D sel de diméthyl-amine utilisé à sa dose homologuée de 1,2 l/ha soit 720 g/ha d'équivalent 2,4D acide pour le traitement des gazons contre les dicotylédones (plantain lancéolé, trèfle blanc et luzerne lupuline).

La formule selon l'invention est utilisée à la demi-dose et à la quart-dose (D/2 et D/4) de la référence commerciale. Les résultats sont exprimés sur une échelle d'efficacité de 0 à 10 affiliés d'une lettre (a à c) représentant le groupe statistique d'appartenance (deux résultats ayant la même lettre appartiennent au même groupe).

| | Dose Eq acide / ha | Plantain Lancéolé (PLALA) 91 jours après le traitement Notation 0-10 | Trèfle Blanc (TRFRE) 91 jours après le traitement Notation 0-10 | Luzerne Lupuline (MEDLU) 91 jours après le traitement Notation 0-10 |
|---|---|---|---|---|
| Réf A600 | D = 720 g/ha eq acide | 5.0 (b) | 0.5 (c) | 9.8 (a) |
| EC 13107400 | D | 9.0 (a) | 4,5 (b) | 10.0 (a) |
| EC 13107400 | D/2 | 4,5 (b) | 3,5 (b) | 8.0 (a) |
| EC 13107400 | D/4 | 2,0 (c) | 0,0 (c) | 4.5 (b) |

Les résultats obtenus montrent l'efficacité de la formule de l'exemple 2 à la dose D et D/2 comparativement à la formule commerciale. Le contrôle de phytotoxicité sur le gazon montre le respect de la sélectivité sur l'ensemble des essais.

### Exemple 18 : Arboriculture

18.1 : La formule de l'exemple 2 (EC13107400) est comparée à une préparation commerciale (réf C600) contenant 600 g/l eq.acide de 2,4-D sel de diméthyl-amine utilisé à sa dose homologuée de 1,6 l/ha soit 960 g/ha d'équivalent 2,4-D acide pour le traitement aux pieds de pommiers (belle de Boskop) contre les dicotylédones (plantain lancéolé).

La formule selon l'invention est utilisée à la demi-dose (D/2) de la référence commerciale. Les résultats sont présentés en pourcentage d'efficacité relatif par rapport aux résultats obtenu avec la préparation de référence à pleine dose (efficacité réelle remise à 100).

| | Dose Eq acide / ha | Plantain Lancéolé (PLALA) 20 jours après le traitement | Plantain Lancéolé (PLALA) 39 jours après le traitement | Plantain Lancéolé (PLALA) 67 jours après le traitement |
|---|---|---|---|---|
| Réf C600 | D = 960 g/ha eq acide | 100 | 100 | 100 |
| Réf C600 | D/2 | 54.5 | 46.2 | 67.9 |
| EC 13107400 | D | 131.6 | 142.5 | 117.8 |
| EC 13107400 | D/2 | 81.7 | 73.2 | 92.7 |

Les résultats obtenus montrent l'efficacité de la formule de l'exemple 2 à la dose D et D/2 comparativement à la formule commerciale.

18.2 : La formule de l'exemple 2 (EC13107400) et la formule de l'exemple 4 (EC13108000) sont comparées à une préparation commerciale (réf A600) contenant 600 g/l eq.acide de 2,4D sel de diméthyl-amine utilisé à sa dose homologuée de 1,6 l/ha soit 960 g/ha d'équivalent 2,4D acide pour le traitement aux pieds de pommiers (Golden rosée) contre les dicotylédones (Mouron rouge, pâquerette, Cardamine hérissée, Euphorbe réveil-matin, Plantain Lancéolé, Plantin moyen, Laiteron des champs, Séneçon commun, Pissenlit, Véronique Agreste).

Les formules selon l'invention sont utilisées à la demi-dose (D/2) de la référence commerciale. Les résultats sont présentés en pourcentage d'efficacité relatif par rapport aux résultats obtenu avec la préparation de référence à pleine dose (efficacité réelle remise à 100).

| | Dose Eq acide / ha | Toutes Dicotylédones (TTDICDI) 13 jours après le traitement | Toutes Dicotylédones (TTDICDI) 75 jours après le traitement | Toutes Dicotylédones (TTDICDI) 106 jours après le traitement |
|---|---|---|---|---|
| Réf A600 | D = 960 g/ha eq acide | 100 | 100 | 100 |
| EC 13107400 | D/2 | 80.8 | 100 | 110 |
| EC 13108000 | D/2 | 95.1 | 117.7 | 100 |

Les résultats obtenus montrent l'efficacité des formules de l'exemple 2 et de l'exemple 4 à la demi-dose comparativement à la formule commerciale.

## Revendications

1. Composition herbicide comprenant au moins un herbicide de la famille des acides phénoxy-alcanoïques, de la famille de l'acide benzoïque ou de ces deux familles, un solvant organique ou une huile et au moins un tensioactif, **caractérisé en ce que**
- elle comprend de 0 à moins de 3% en masse d'eau,
- l'herbicide ou les herbicides des deux familles est ou sont sous la forme acide libre,
- elle est exempte d'herbicide d'une autre famille que les deux familles,
- elle contient au moins au titre des acides phénoxy-alcanoïques le 2,4D (l'acide 2,4 dichlorophénoxyacétique), le 2,4DB (l'acide 2-(2,4-dichloro-phénoxy)butyrique), le Dichlorprop (l'acide (RS)-2-(2,4-dichlorophénoxy)propionique), le dichlorprop-P (l'acide (R)-2-(2,4-dichlorophénoxy) propionique), le MCPA (l'acide 4-chloro-o-tolyloxy acétique), le MCPB (l'acide 4-(4-chloro-o-tolyloxy) butyrique), le mecoprop (l'acide (RS)-2-(4-chloro-o-tolyloxy)propionique), le mecoprop-p (l'acide (R)-2-(4-chloro-o-tolyloxy)butyrique), au titre des dérivés d'acide benzoïque le Dicamba (l'acide 3,6-dichloro-o-anisique), le 2,3,6-TBA (l'acide 2,3,6 trichlorobenzoïque), et
- elle contient, au moins au titre du tensioactif, une molécule de formule ROXn où R est un groupement aliphatique linéaire ou ramifié avec ou sans insaturation et comportant de 6 à 22, de préférence de 8 à 16 atomes de carbone, X est un reste de pentose, de préférence le xylose, et n est compris entre 1 et 3, de préférence entre 1 et 1,8 et représente le degré d'oligomérisation du sucre.

2. Composition suivant la revendication 1, **caractérisée en ce qu'**elle comprend de 0 à moins de 1% en masse d'eau.

3. Composition suivant l'une des revendications précédentes, **caractérisée en ce que** les solvants ou les huiles sont choisis parmi les huiles végétales, les esters d'huiles végétales, les esters d'acides gras végétaux, les esters d'acides obtenus par fermentation de biomasse végétale, les terpènes, les alcools dérivés d'huiles végétales, synthétiques ou semi-synthétiques, les alcools obtenus par fermentation de biomasse végétale et les solvants végétales, synthétiques ou semi-synthétiques facilement biodégradables.

4. Composition suivant l'une des revendications précédentes, **caractérisée en ce qu'**elle contient, au titre des solvants ou huiles, un alcool terpénique, un di-esters d'acide succinique notamment le succinate de di-éthyle, un diol, notamment le 1,3 propanediol, un alcool notamment le 2-hexyl-decanol.

5. Composition suivant l'une des revendications précédentes, **caractérisée en ce qu'**elle contient, au moins un tensioactif de formule ROXn où R est un groupement aliphatique linéaire ou ramifié avec ou sans insaturation et comportant de 6 à 22, de préférence de 8 à 16, atomes de carbone, X est un reste de pentose, de préférence de xylose et n est compris entre 1 et 3, de préférence entre 1 et 1,8 et représente le degré d'oligomérisation du sucre et au moins un co-tensioactif non ionique, anionique, cationique ou amphotère.

6. Composition suivant l'une des revendications précédentes, **caractérisée en ce qu'**elle contient, par rapport à la masse totale de la préparation, de 1 à 65% et de préférence de 10 à 45% d'au moins un herbicide de la famille des acides phénoxy-alcanoïques et/ou un dérivé de la famille de l'acide benzoïque sous forme acide, de 20 à 98% et de préférence de 25 à 85% d'un ou plusieurs solvants ou huiles, de 1 à 65% et de préférence de 5 à 45% d'un ou plusieurs tensioactifs de formule ROXn où R est un groupement aliphatique linéaire ou ramifié avec ou sans insaturation et comportant de 8 à 16 atomes de carbone, X étant un reste de xylose et n étant un nombre compris entre 1 et 1,8, et de 0 à 60% d'un ou plusieurs co-tensioactifs non-ioniques, anioniques, cationiques ou amphotères.

7. Composition suivant l'une des revendications précédentes, **caractérisée en ce qu'**elle comprend de 1 à 25% d'un ou plusieurs co-tensioactifs non-ioniques, anioniques, cationiques ou amphotères.

8. Procédé de préparation d'une préparation herbicide, **caractérisé en ce que** l'on mélange au moins une composition suivant les revendications 1 à 7 avec de l'eau, dans laquelle la quantité d'eau apportée représente de 75 à 99,999%, de préférence de 95 à 99,9% de la masse totale de la préparation.

9. Procédé pour contrôler ou prévenir la croissance de mauvaises herbes dans les cultures de céréales comme l'ensemble des espèces de blé, d'orge, de seigle, de triticale, de millet, d'épeautre, de sarrasin, de sorgho, de riz, de maïs, de fonio, d'éleusine, d'engrain, de teff, de moha, dans les vergers, notamment les pécher, poirier, pommier, prunier, cerisier, noisetier, abricotier, amandier, kiwi, dans les prairies permanentes et les labours reverdis en inter-cultures, sur les gazons de graminées, en horticulture ou encore dans les champs de cannes à sucre, **caractérisé en ce que** l'on applique une composition préparée suivant les revendications 1 à 7 directement sur les cultures ou de manière dirigée directement sur les mauvaises herbes.

10. Procédé pour contrôler ou prévenir la croissance de mauvaises herbes selon la revendication 9, **caractérisé en ce qu'**en grandes cultures les quantités de bouillie herbicide pulvérisées sont généralement de 50 à 1000 litres par hectare et pour le traitement des prairies, des gazons ou en arboriculture les quantités sont de 100 à 1000 litres par hectare.

## Patentansprüche

1. Herbizidzusammensetzung, umfassend wenigstens ein Herbizid aus der Familie der Phenoxyalkansäuren, aus der Benzoesäurefamilie oder aus diesen beiden Familien, ein organisches Lösemittel oder ein Öl und wenigstens ein Tensid, **dadurch gekennzeichnet, dass**
- sie 0 bis weniger als 3 Massenprozent Wasser umfasst,
- das Herbizid oder die Herbizide aus den beiden Familien in der Form einer freien Säure vorliegt oder vorliegen,
- sie kein Herbizid aus einer anderen Familie als den beiden Familien umfasst,
- sie wenigstens Folgendes umfasst: als Phenoxyalkansäuren: 2,4-D (2,4-DichlorPhenoxyessigsäure), 2,4-DB (2-(2,4-Dichlor-phénoxy)buttersäure), Didchlorprop ((RS)-2-(2,4-dichlorophenoxy)propionsäure), Dichlorprop-P ((R)-2-(2,4-dichlorophenoxy)propionsäure), MCPA (4-Chlor-o-tolyloxyessigsäure), MCPB (4-(4-Chlor-o-tolyloxy)buttersäure), Mecoprop ((RS)-2-(4-Chlor-o-tolyloxy)propionsäure), Mecoprop-p ((R)-2-(4-Chlor-o-tolyloxy)buttersäure), als Benzoesäurederivate: Dicamba (3,6-Dichlor-o-anissäure), 2,3,6-TBA (2,3,6-Trichlorbenzoesäure), und
- sie als Tensid wenigstens ein Molekül der Formel ROXn umfasst, wobei R für eine ungesättigte oder gesättigte, lineare oder verzweigte aliphatische Gruppe steht, die 6 bis 22, vorzugsweise 8 bis 16 Kohlenstoffatome aufweist, X für einen Pentoserest, vorzugsweise Xylose, steht und n zwischen 1 und 3, vorzugsweise zwischen 1 und 1,8 beträgt und den Oligomerisationsgrad des Zuckers darstellt.

2. Zusammensetzung nach Anspruch 1, **dadurch gekennzeichnet, dass** sie 0 bis weniger als 1 Massenprozent Wasser umfasst.

3. Zusammensetzung nach einem der vorhergehenden Ansprüche, **dadurch gekennzeichnet, dass** die Lösemittel oder Öle aus Pflanzenölen, aus Estern von Pflanzenölen, aus Estern von pflanzlichen Fettsäuren, aus Estern von Säuren, die durch Gärung einer pflanzlichen Biomasse gewonnen wurden, aus Terpenen, aus Alkoholen, die von pflanzlichen, synthetischen oder halbsynthetischen Ölen abgeleitet wurden; aus Alkoholen, die durch Gärung einer pflanzlichen Biomasse gewonnen wurden, und aus leicht biologisch abbaubaren pflanzlichen, synthetischen oder halbsynthetischen Lösemitteln ausgewählt sind.

4. Zusammensetzung nach einem der vorhergehenden Ansprüche, **dadurch gekennzeichnet, dass** sie als Lösemittel oder Öle einen Terpenalkohol, einen Bernsteinsäure-Diester, insbesondere Diethylsuccinat, ein Diol, insbesondere 1,3-Propandiol, einen Alkohol, insbesondere 2-Hexyl-decanol, umfasst.

5. Zusammensetzung nach einem der vorhergehenden Ansprüche, **dadurch gekennzeichnet, dass** sie Folgendes umfasst: wenigstens ein Tensid der Formel ROXn, wobei R für eine ungesättigte oder gesättigte, lineare oder verzweigte aliphatische Gruppe steht, die 6 bis 22, vorzugsweise 8 bis 16 Kohlenstoffatome aufweist, X für einen Pentoserest, vorzugsweise Xylose, steht und n zwischen 1 und 3, vorzugsweise zwischen 1 und 1,8 beträgt und den Oligomerisationsgrad des Zuckers darstellt, und wenigstens ein nichtionisches, anionisches, kationisches oder amphoteres Cotensid.

6. Zusammensetzung nach einem der vorhergehenden Ansprüche, **dadurch gekennzeichnet, dass** sie bezogen auf die Gesamtmasse der Zubereitung Folgendes umfasst: 1 bis 65% und vorzugsweise 10 bis 45% wenigstens eines Herbizids der Familie der Phenoxyalkansäuren und/oder eines Derivats der Benzoesäurefamilie in saurer Form, 20 bis 98% und vorzugsweise 25 bis 85% eines oder mehrerer Lösemittel oder Öle, 1 bis 65% und vorzugsweise 5 bis 45% eines oder mehrerer Tenside der Formel ROXn, wobei R für eine ungesättigte oder gesättigte, lineare oder verzweigte aliphatische Gruppe steht, die 8 bis 16 Kohlenstoffatome aufweist, X für einen Pentoserest, vorzugsweise Xylose, steht und n für eine Zahl zwischen 1 und 1,8 steht, und 0 bis 60% eines oder mehrerer nichtionischer, anionischer, kationischer oder amphoterer Cotenside.

7. Zusammensetzung nach einem der vorhergehenden Ansprüche, **dadurch gekennzeichnet, dass** sie 1 bis 25% eines oder mehrerer nichtionischer, anionischer, kationischer oder amphoterer Cotenside umfasst.

8. Verfahren zur Herstellung einer Herbizid-Zubereitung, **dadurch gekennzeichnet, dass** wenigstens eine Zusammensetzung nach den Ansprüchen 1 bis 7 mit Wasser gemischt wird, wobei die Menge des zugesetzten Wassers 75 bis 99,999%, vorzugsweise 95 bis 99,9% der Gesamtmasse der Zubereitung ausmacht.

9. Verfahren zur Kontrolle oder Verhinderung des Wachstums von Unkraut in Kulturen von Getreide aller Arten wie Weizen, Gerste, Roggen, Triticale, Hirse, Dinkel, Buchweizen, Sorghum, Reis, Mais, Foniohirse, Fingerhirse, Einkorn, Zwerghirse, Kolbenhirse, in Obstplantagen insbesondere mit Pfirsichbäumen, Birnbäumen, Apfelbäumen, Pflaumenbäumen, Kirschbäumen, Haselnusssträuchern, Aprikosenbäumen, Mandelbäumen, Kiwisträuchern, in Dauergrünland und auf begrünten Ackerflächen mit Zwischenfruchtanbau, auf Rasenflächen, im Gartenbau oder auf Zuckerrohrfeldern, **dadurch gekennzeichnet, dass** eine zubereitete Zusammensetzung nach den Ansprüchen 1 bis 7 direkt auf die Kulturen oder auf gezielte Weise direkt auf das Unkraut aufgetragen wird.

10. Verfahren zur Kontrolle oder Verhinderung des Wachstums von Unkraut nach Anspruch 9, **dadurch gekennzeichnet, dass** die zerstäubten Mengen an herbizider Brühe bei großen Kulturen im Allgemeinen 50 bis 1000 Liter pro Hektar betragen und dass die Mengen bei der Behandlung von Wiesen oder Rasenflächen oder im Obstbau 100 bis 1000 Liter pro Hektar betragen.

## Claims

1. Herbicide composition containing at least one herbicide from the family of phenoxyalkanoic acids, from the family of benzoic acid or from both of said families, an organic solvent or an oil and at least one surfactant, **characterised in that**
- it contains from 0 to less than 3% by mass of water,
- the herbicide or herbicides from the two families is or are in the free acid form, and
- it is free from herbicide from a family other than the two families,
- it contains at least as phenoxyalkanoic acids 2,4-D (2,4-dichlorophenoxyacetic acid), 2,4-DB (2-(2,4-dichlorophenoxy)butyric acid), dichlorprop ((RS)-2-(2,4-dichlorophenoxy)propionic acid), dichlorprop-P ((R)-2-(2,4-dichlorophenoxy)-propionic acid), MCPA (4-chloro-o-tolyloxyacetic acid), MCPB (4-(4-chloro-o-tolyloxy)butyric acid), mecoprop ((RS)-2-(4-chloro-o-tolyloxy)propionic acid), mecoprop-P ((R)-2-(4-chloro-o-tolyloxy)butyric acid) and as benzoic acid derivatives Dicamba (3,6-dichloro-o-anisic acid), 2,3,6-TBA (2,3,6-trichlorobenzoic acid) and
- it contains, at least as the surfactant, a molecule of formula ROXn in which R is a linear or branched aliphatic group, saturated or unsaturated and having 6 to 22, preferably 8 to 16 carbon atoms, X is a pentose radical, preferably xylose, and n is between 1 and 3, preferably between 1 and 1.8, and represents the degree of oligomerisation of the sugar.

2. Composition according to claim 1, **characterised in that** it contains from 0 to less than 1% by mass of water.

3. Composition according to one of the preceding claims, **characterised in that** the solvents or oils are chosen from vegetable oils, esters of vegetable oils, esters of vegetable fatty acids, esters of acids obtained by fermentation of vegetable biomass, terpenes, synthetic or semi-synthetic alcohols derived from vegetable oils, alcohols obtained by fermentation of vegetable biomass and synthetic or semi-synthetic readily biodegradable vegetable solvents.

4. Composition according to one of the preceding claims, **characterised in that** it contains, as solvents or oils, a terpene alcohol, a succinic acid diester, in particular diethyl succinate, a diol, in particular 1,3-propanediol, an alcohol, in particular 2-hexyldecanol.

5. Composition according to one of the preceding claims, **characterised in that** it contains at least one surfactant of formula ROXn, in which R is a linear or branched aliphatic group, saturated or unsaturated and having 6 to 22, preferably 8 to 16 carbon atoms, X is a pentose radical, preferably xylose, and n is between 1 and 3, preferably between 1 and 1.8, and represents the degree of oligomerisation of the sugar, and at least one non-ionic, anionic, cationic or amphoteric co-surfactant.

6. Composition according to one of the preceding claims, **characterised in that in that** it contains, relative to the total mass of the preparation, from 1 to 65% and preferably from 10 to 45% of at least one herbicide from the family of phenoxyalkanoic acids and/or a derivative of the benzoic acid family in acid form, from 20 to 98% and preferably from 25 to 85% of one or more solvents or oils, from 1 to 65% and preferably from 5 to 45% of one or more surfactants of formula ROXn, in which R is a linear or branched aliphatic group, saturated or unsaturated, having 8 to 16 carbon atoms, X being a xylose radical and n being a number between 1 and 1.8, and from 0 to 60% and preferably from 1 to 25% of one or more non-ionic, anionic, cationic or amphoteric co-surfactants.

7. Composition according to one of the preceding claims, **characterised in that** it contains from 1 to 25% of one or more non-ionic, anionic, cationic or amphoteric co-surfactants.

8. Method of preparation of a herbicide preparation **characterised in that** at least one composition according to claims 1 to 7 is mixed with water, in which the amount of water added represents from 75 to 99.999%, preferably from 95 to 99.9%, of the total mass of the preparation.

9. Method for controlling or preventing the growth of weeds in crops of cereals such as all species of wheat, barley, rye, triticale, millet, spelt, buckwheat, sorghum, rice, maize, fonio, finger millet, einkorn wheat, teff, foxtail millet, in orchards, in particular peach, pear, apple, plum, cherry, hazel, apricot, almond, kiwi, in permanent grassland and revegetated ploughed fields in intercrop seasons, on grass lawns, in horticulture or in fields of sugar cane, **characterised in that** a composition prepared in accordance with claims 1 to 7 is applied directly to the crops or in a targeted manner directly to the weeds.

10. Method for controlling or preventing the growth of weeds according to claim 9, **characterised in that** in large-scale farming the amounts of herbicide mixture that are sprayed are generally from 50 to 1000 litres per hectare and for the treatment of grassland, lawns or in arboriculture the amounts are from 100 to 1000 litres per hectare.
